Europäisches Patentamt

European Patent Office

Office européen des brevets

(11) Publication number: **0 108 426**
**B1**

# EUROPEAN PATENT SPECIFICATION

(45) Date of publication of patent specification: **25.03.87**

(51) Int. Cl.⁴: **B 01 D 53/22,** B 01 D 13/00

(21) Application number: **83201139.9**

(22) Date of filing: **23.12.80**

(60) Publication number of the earlier application in accordance with Art. 76 EPC: **0 031 725**

(54) **Module for concentrating a specified gas in a gaseous mixture.**

(30) Priority: **06.11.80 JP 155197/80**
**06.11.80 JP 155198/80**

(43) Date of publication of application:
**16.05.84 Bulletin 84/20**

(45) Publication of the grant of the patent:
**25.03.87 Bulletin 87/13**

(84) Designated Contracting States:
**DE FR GB**

(56) References cited:
**AU-B- 513 075**
**DE-A-2 825 789**
**DE-B-1 091 990**
**US-A-2 964 124**
**US-A-3 811 319**
**US-A-3 837 146**
**US-A-4 187 086**

(73) Proprietor: **TEIJIN LIMITED**
**11 Minami Honmachi 1-chome Higashi-ku Osaka-shi Osaka-fu (JP)**

(72) Inventor: **Yamada, Takeyoshi**
**1-3, Yamate-machi 3-chome**
**Iwakuni-shi Yamaguchi-ken (JP)**
Inventor: **Kurisu, Shizuka**
**4-37, Kusunoki-cho 3-chome**
**Iwakuni-shi Yamaguchi-ken (JP)**
Inventor: **Azuma, Shizuo**
**28-2, Ozu-cho, 1-chome**
**Iwakuni-shi Yamaguchi-ken (JP)**
Inventor: **Sugie, Kiyoshi**
**28-7, Ozu-cho, 1-chome**
**Iwakuni-shi Yamaguchi-ken (JP)**
Inventor: **Yamaji, Teizo**
**5-10, Yamate-machi, 4-chome**
**Iwakuni-shi Yamaguchi-ken (JP)**

(74) Representative: **Myerscough, Philip Boyd et al**
**J.A.Kemp & Co. 14, South Square Gray's Inn London, WC1R 5EU (GB)**

## Description

This invention relates to a module for concentrating a specified gas such as oxygen gas in a gaseous mixture such as air.

Devices for obtaining an oxygen-enriched gas from air are disclosed in US—A—3976451 and 4174955, while US—A—4155793 describes a process for preparing a composite laminar membrane for use in such devices. US—A—4132824 and 4192842 describe the preparation of ultrathin membranes for use in gas separations. In European Patent Application EP—A—0031725 (published 8 July 1981), from which this Application is divided, we describe the preparation of ultrathin solid membranes of uniform thickness having gas separation factors substantially equivalent to the inherent gas separation factor of the addition polymer from which they are made.

According to the present invention we provide a module comprising a plurality of members for obtaining a gas having a specified gas concentrated therein from a mixture of at least two gases, each of said members comprising (a) a support plate (b) an intermediate element providing passage for gas when the support plate is not net-like, and (c) a composite film comprised of a porous sheet-like material and one or a plurality of ultrathin solid membranes supported on the porous sheet-like material with a thickness of 5 to 500 nm (50 to 5000 Å), said ultrathin solid membranes being of an addition polymer derived from at least one monomer selected from ethylenically unsaturated hydrocarbon monomers and conjugated unsaturated hydrocarbon monomers, and said composite film being laminated to one or both surfaces of the solid support plate so that the porous sheet-like material of the composite film faces the support plate; characterized in that

(1) each of said members is sealed gas-tight around the periphery except for a passage to a first gas drawing port for drawing off the gas having a specified gas concentrated therein, and the pressure drop in the passage for concentrated gas from each member is not more than 270 Pa (2 mmHg) per cm in a direction away from the member,

(2) the module has a common feed port for feeding the mixture of at least two gases to the solid membrane surface of each member, a second common drawing port connected to the first gas drawing port of each of said members, and a third common drawing port for drawing off the remaining gases formed as a result of concentration by each of the members, and

(3) the passage in each of the members to the first gas drawing port is positioned closer to the common feed port than to the third common drawing port.

The solid membrane provided by the process of EP—A—0031725 is extremely thin, and has a uniform thickness and excellent gas separating ability. In particular, a solid membrane produced continuously by that process and supported on a porous sheet-like material has a broad area in addition to having the aforesaid properties. The porous sheet-like material makes up for the weak self-supporting ability of the solid membrane, and scarcely affects the gas separation ability of the solid membrane.

The porous sheet-like material may be any sheet-like material having a number of small pores, smoothness and self-supporting property, such as Japanese paper, nonwoven cloths, synthetic paper-like sheets, filter papers, cloths, wire nets, filtration membranes, ultrafiltration membranes, and porous films. Preferred porous sheet-like materials include porous polyethylene films (e.g. Celpore, a trademark for a product of Sekisui Chemical Co., Ltd.), porous polypropylene films (e.g. Celgard, a trademark for a product of Celanese Corporation), cellulosic ultrafiltration membranes (e.g. Fuji-Microfilter, a trademark for a product of Fuji Film Co., Ltd), porous polycarbonate films (e.g. Nuclepore, a trademark for a product of Nomura Microscience Co., Ltd.), and polysulfone-type ultrafiltration membranes (e.g. Toyo-ultrafilter, a trademark for a product of Toyo Filter Paper Co., Ltd.). The porous polypropylene films are especially preferred because of their good adhesion to the solid membrane.

If desired, two or more solid membranes may be supported as a laminated layer on the porous sheet-like material. Particularly, an assembly of two solid membranes supported in a laminated layer on the porous sheet-like material exhibits excellent gas separating ability when used in separation of gases, and in most cases, shows a gas separation factor equivalent to the inherent gas separation factor of the addition polymer forming the solid membrane. It is rare therefore that more than two solid membranes should be laminated in order to obtain the desired gas separating ability. To superimpose two or more solid membranes on the porous sheet-like material, the continuous process of EP—A—0031725 can be carried out, for example, in the same way as described therein except that a porous sheet-like material having supported thereon one solid membrane is used instead of the porous sheet-like material.

The porous sheet-like material having supported thereon the solid membrane (which is referred to herein as a "composite film") can be used as prepared by the process of EP—A—0031725. Alternatively before use the composite film may be heat-treated under temperature and time conditions which do not cause melting of the solid membrane (for example, in the case of heating in the atmosphere, heating is carried out at a temperature of 60 to 300°C, preferably 80 to 200°C, for a period of 3 seconds to 50 hours, preferably 5 seconds to 20 hours) to improve adhesion between the solid membrane and the porous sheet-like material.

The solid membrane has a thickness of 5 to 300 nm (50 to 3000Å).

The module of the invention is used to obtain a gas having a specified component gas concentrated therein from a mixture of two or more gases. For example, it can be used in the production of oxygen-enriched air from atmospheric air, the production of $H_2$-enriched gas from a gaseous mixture containing $H_2$ and CO, the removal of $H_2O$ from a gaseous mixture containing $H_2O$, the removal of $SO_2$ and/or nitrogen oxide gases $No_x$, from a gaseous mixture containing $SO_2$ and/or $NO_x$ and the production of a He-enriched gas from a gaseous mixture containing He. It is preferably used in the production of oxygen-enriched air (with an oxygen content of, for example 30 to 45%) from atmospheric air.

In obtaining a concentrated gas by using the module of this invention, it is only necessary to provide a difference between the partial pressures of a gas to be concentrated on the two surfaces of the solid membrane. And as the ratio (high pressure/low pressure) between the partial pressures of the gas increases, there is obtained a gas in which the gas to be concentrated is more enriched. For example, in the production of oxygen-enriched air from the atmospheric air, the pressure of atmospheric air fed to one surface of the solid membrane can be increased to more than atmospheric pressure while the pressure at the other surface is maintained at atmospheric pressure or reduced pressure. Alternatively the pressure of atmospheric air supplied to one surface can be maintained at atmospheric pressure while the pressure at the other surface is reduced.

The critical feature of the module of this invention is that it has the second common gas drawing port connected to the first gas drawing port of each of the members for drawing the concentrated gas, and the pressure drop in the passage for the concentrated gas from each of the members is not more than 270 Pa (2 mmHg) per cm in a direction away from the member. A module of this construction is compact and light and has excellent separating efficiency.

In the members of the module of this invention, the support plate can be effectively used by placing the composite film on its surfaces. This means that the membrane area per member can be maximized. In other words, if the area of the solid membrane required for gas permeation is constant, the number of members can be minimized, and a compact and light-weight module can be built.

The support plate in the module of this invention has the dual function of stabilizing the form of the members to support the composite film and either as such when the support plate is net-like or in conjunction with an intermediate element when the support plate is not net-like of forming a passage for a concentrated gas which has permeated through the solid membrane. If the gas has difficulty flowing through the passage, the pressure drop increases, and therefore, the difference between the pressures exerted on both surfaces of the solid membrane is small. Hence, the amount of the gas permeated decreases proportionally to such a difference in pressure.

It is known that separation of a gaseous mixture becomes better (the gas separating ability is better) as the ratio of the pressures exerted on both surfaces of the solid membrane (the ratio of the pressure on the higher pressure side to the pressure on the lower pressure side) increases. Accordingly, when the pressure drop in the passage is high, the pressure on the lower pressure side increases and the ratio of the pressures decreases. Consequently, the concentration of the desired gas in the concentrated gas obtained after permeation through the solid membrane decreases.

For this reason, the support plate is suitably of a structure which minimizes hampering of the passage for the concentrated gas which has permeated through the solid membrane, namely a structure which minimizes the pressure drop. A member in which the pressure drop in a passage for concentrated gas is not more than 270 Pa (2 mmHg), preferably not more than 200 Pa (1.5 mmHg), more preferably not more than 130 Pa (1 mmHg), per cm is required.

The pressure drop is measured in this invention in the following manner.

A sample having a length of 50 cm and a width of 25 cm is cut out from the member, and the entire surface of the sample is covered with a gas-barrier film. Both 50 cm-long ends of the sample are sealed gas-tight. To both 25 cm-long ends is connected a thick tubular flow opening through which a gas flows without resistance, for example a tube having an inside diameter of about 8 mm. One end of the tube is kept open and adapted for decreasing the opening area, and vacuum suction is effected from the other opening of the tube. When the flow rate of air is 1 liter/min. on the suction side, the pressures at both openings are measured, and the difference between them is defined as the pressure drop. The measurement is made at 25°C.

The support plate in the module of this invention is preferably a metal plate such as an aluminum plate, a Duralmin (tradename) plate, a plastic plate such as a polypropylene, hard vinyl chloride resin, fiber-reinforced polyethylene terephthalate or unsaturated polyester plate, or a net-like article such as stainless steel net or porous polypropylene plate. When a metal plate or plastic plate other than the net-like article is used as the support plate, an intermediate element is used which forms a sufficient passage for a concentrated gas between the support plate and the composite film. The intermediate element may also be used when the solid support plate is a net-like article. Various kinds of nets, nonwoven fabrics or porous materials can be used as the intermediate element. A member containing such an intermediate element can be built by laminating the net or nonwoven fabric, for example, either alone or in combination on one or both surfaces of the support plate, and further laminating the composite film onto the intermediate element. It is necessary in this case to laminate these materials such that the pressure drop in each member is within the above-specified range.

The intermediate element acts to render the flow of a gas through the member easy when a net-like article is not used as the support plate, and its selection is especially important. The net preferably has coarse meshes and a raised-and-depressed pattern. It may be made of a plastic or metal, and plastic nets are preferred from the viewpoint of light weight. The plastic nets preferably have stiffness, and for this purpose, such materials as polypropylene, polyethylene terephthalate and polyamides may be used. Examples of commercially available nets are Vexor of Du Pont, Netlon of Tokyo Polymer Co., Ltd., and Nip nets of N.B.C. Industrial Co.

The nonwoven fabrics may be made from, for example, polyethylene terephthalate, polypropylene, polyethylene orpolyamides. For example, Unicell R Type of Teijin Limited, and MF Type of Japan Vilene are commercially available.

A preferred laminated structure in the member of the module of this invention consists of a metal plate, a net-like material on both surfaces of the metal plate, a non-woven fabric on both surfaces of the net-like material and a composite film laminated to the surfaces of the nonwoven fabric so that the porous sheet-like material contacts the non-woven fabric. A member of this structure shows an especially small pressure drop, has good durability and prevents deformation of the solid membrane. In particular, the use of the non-woven fabric is advantageous in avoiding rupture of the solid membrane which may occur in the absence of a nonwoven fabric as a result of deformation of the solid membrane along the profile of the net-like material (generally having coarse meshes and an uneven surface). The nonwoven fabric also has an action of making the flow of a gas easy. Accordingly, it is preferred that the nonwoven fabric should have a smooth surface and a smaller mesh opening size than the mesh opening size of the net-like material.

To make the entire module compact, the thickness of the member should preferably be as small as possible. It is generally not more than 5 mm, preferably not more than 4 mm, more preferably not more than 3 mm.

As stated hereinabove, the member used in the module of this invention preferably has the composite film on both surfaces of one support plate. A first gas drawing port is provided in this member in order to draw together the concentrated gas obtained after permeation through the two composite films. The first drawing port should have a cross-sectional area and a length which scarcely permit a pressure drop therein. The member having one drawing port for the two solid membranes is characterised by the fact that the number of drawing ports can be reduced to one-half as compared with a member having two drawing ports for two solid membranes, and the number of assembling pipes for assembling the concentrated gas from the drawing ports can be decreased, thus imparting a simple and convenient structure to the member and the module.

Excepting the passage to the drawing port, the entire periphery of the member is sealed up gas-tight. In other words, it is necessary to provide a structure which does not permit mixing of a feed gas and the concentrated gas which has permeated through the solid membrane. To provide such a structure adhesives are preferably used. Examples of preferred adhesives are epoxy resins, and an ionomer resin (Surlyn A®) formed into a film. When an adhesive in a film form (for instance, Surlyn A® film) is used, uniform thickness and good gas-tightness can be achieved.

A plurality of members so produced are built into an array of the stacked members so as to prevent contact of the solid membranes with each other and also to provide a passage through which a gas flows along the outside surface of the solid membrane. The interval between the members is at least 1 mm, preferably at least 2 mm. A preferred array for the production of the module of this invention is the one in which the members at two opposite ends are composed of a support plate and the composite film laminated only to its one surface so as to avoid exposure of the solid membrane surfaces.

Spacers of any material are used between the members in building the array. From the viewpoint of the light weight of the module or the firmness of the members, the spacers are preferably made of a rubber or a plastic. It is sufficient that the spacers are located at the peripheral edges of the members, and are fixed to the member by, for example, an adhesive.

The array so built is then placed into a box capable of receiving it to provide the module of this invention. In the array within the box, the first gas drawing ports from the individual members are connected to a single assembling pipe. One end portion of the assembling pipe is drawn from the box to form a second gas drawing port from which the concentrated gas is drawn off.

The box further includes a common feed port for feeding a gas to be concentrated from outside the box, and a third common drawing port for drawing the gas remaining after drawing off the concentrated gas.

The gas to be concentrated which has been fed into the box from the common feed port is concentrated through the solid membranes of the members while it flows through the passages between the members, thereby giving a concentrated gas (which is drawn out of the box through the second common drawing port) to the inside of the solid membrane, while the remaining gas is discharged from the box through the third common drawing port.

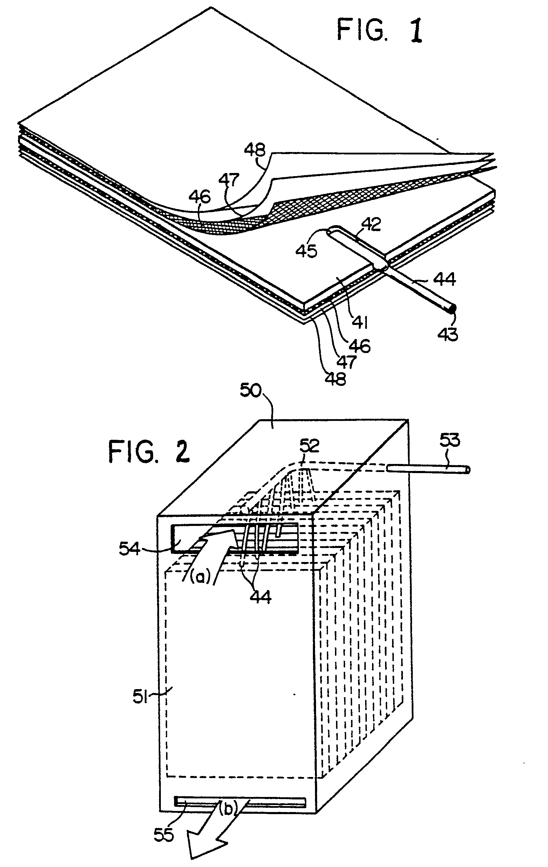

The arrangement of the drawing ports for each member, the common feed port and third common drawing port is such that the gas to be concentrated which is flowing through the passages between the members of the array forms a flow which is countercurrent (for example, as shown in Figure 2, the gas to be concentrated is introduced into the passage between the members from the direction of the first gas drawing port), or is angularly displaced (i.e.

not concurrent), to the flowing direction of the concentrated gas given to the inside of the solid membrane. By forming such a flow,·the module of this invention has an improved separating efficiency.

The module of this invention is advantageously used when a gas to be concentrated is fed at atmospheric pressure from the common feed port, and the second common drawing port from which the concentrated gas is drawn off is connected to a pressure reduction system to reduce the pressure of the passage for the concentrated gas. Such a module is light in weight and compact.

When, for example, oxygen-enriched air is produced from atmospheric air, the amount of the air to be fed to the module is usually at least 5 times, preferably at least 10 times, more preferably at least 30 times, the amount of oxygen-enriched air drawn from the module.

An apparatus for obtaining oxygen-enriched air from the atmospheric air using the module of this invention is embodied by an oxygen enricher provided by this invention.

Thus, according to the invention there is provided an oxygen-enricher for obtaining an oxygen-enriched gas from air comprising a module including an array of a plurality of members for obtaining the oxygen-enriched gas from the air, an air feed port for feeding the air into the module, an air exhaust port for drawing a gas of a reduced oxygen concentration from the module, a vacuum pump for reducing the pressure on oxygen-enriched gas in the members of the array and withdrawing the oxygen-enriched gas therefrom through a tube, cooling and water-removing means for lowering the temperature of the oxygen-enriched gas from the vacuum pump and removing water therefrom, and a housing; characterised in that

(1) the module is a module of the invention,

(2) a fan is provided in front of the air feed port of the module and drawing therefrom a gas having a reduced oxygen concentration,

(3) said vacuum pump is adapted to be cooled by the gas having a reduced oxygen concentration which has left the array, and

(4) a passage is provided through which the oxygen-enriched gas from the vacuum pump flows while it is cooled fully by the cooling and water-removing means cooled by the air taken into the oxygen enricher from the air feed port, and, the cooled oxygen-enriched gas is then drawn out of the oxygen enricher without heat exchange with the gas having a reduced oxygen concentration which has cooled the vacuum pump.

The oxygen-enriched air (gas) obtained by the oxygen enricher of this invention can be used therapeutically for patients with diseases of the respiratory system such as asthma, emphysema and chronic bronchitis, and for industrial applications in small-size combustion furnaces and aquaculture. The oxygen enricher of this invention is characterised by being light in weight and compact, producing little noise, and being able to produce oxygen-enriched air having a small temperature difference from the temperature of the atmospheric air and having an oxygen concentration of not more than 50%. Accordingly, the oxygen-enriched air obtained from the oxygen enricher of this invention is especially recommended for use in medical therapy.

Inhalation of oxygen-enriched air having an oxygen concentration of more than 60% is known to cause pneumonic ailments or nervous disorders rather than to perform therapy. It is also known that oxygen-enriched air having a large temperature difference from the temperature of the atmospheric air gives an unpleasant feeling to patients. Evidently, a heavy, bulky and noise-making device is inappropriate.

Incorporation of the module into the oxygen enricher can be achieved not only by setting the module of this invention therein, but also providing the aforesaid array before the building of the module of this invention in a preselected area in the oxygen enricher. The oxygen enricher of this invention includes those in which the module has been incorporated by any of these methods.

The fan takes the air from the air feed opening, supplies it to the module and discharges it from the discharge opening.

The vacuum pump reduces the pressure of the passages for the oxygen-enriched air in the module and takes the oxygen-enriched air out of the oxygen enricher so that concentration is effected with good efficiency through the solid membranes.

In the oxygen enricher, the gas having a reduced oxygen concentration as a result of going through the module is discharged from the air exhaust port after it has cooled the vacuum pump. Before the oxygen-enriched air from the vacuum pump is taken out of the oxygen enricher, it is cooled with the atmospheric air taken into the oxygen enricher from the air feed opening and the water is removed therefrom. The cooling and water removing means may, for example, be a hose through which oxygen-enriched air can flow. The cooled oxygen-enriched air is taken out of the oxygen enricher without heat exchange with the hot gas to be discharged which has cooled the vacuum pump.

The fan used in this invention should be capable of supplying atmospheric air into the module in an amount at least 5 times, preferably at least 10 times, more preferably at least 30 times, the amount of oxygen-enriched air to be drawn off from the module. A suitable example of the vacuum pump is one which does not permit inclusion of fine particles such as oils because the resulting oxygen-enriched air is used for human inhalation. A preferred vacuum pump is of the oilless type with noise suppression and good durability. The ability of the pump varies greatly depending upon the amount of enriched air, the concentration of oxygen, and the performance of the separating membrane. For example, when it is desired to obtain oxygen-enriched air having an oxygen concentration of at least 35% at 6 liters/min. for therapeutic purposes, and the ratio of the oxygen permeation coefficient to nitrogen permeation coefficient of the solid membrane is 3.5, the pump is required to have such a performance as can secure a flow rate of 6 liters/min. at an absolute pressure of 36 kPa (270 mmHg). For use in therapeutic oxygen enrichers, oilless pumps of the diaphragm type made by Gast Corp. and Thomas Corp. of U.S.A. and Iwai Kabushiki Kaisha of Japan, for example, are used preferably.

The gas to be discharged from the module can be utilized for the cooling of the vacuum pump in operation. Preferably, the cooled gas is discharged out of the oxygen enricher through an air duct having at least one winding portion in order to prevent leakage of the pump noises from the oxygen enricher. It is also preferred to apply a sound absorbing material, for example, to the wall of the housing around the pump.

A heat exchanger such as a hose is used as the cooling and water-separating means. In order to cool the oxygen-enriched air with good efficiency by the atmospheric air to a point near the temperature of the atmospheric air through the heat exchanger it is preferred to provide the heat exchanger immediately near the air feed opening. Care should be taken so that the surrounding of the heat exchanger is not warmed by the heat of the vacuum pump.

From the standpoint of heat conduction, the heat exchanger is preferably made of metallic material. A copper material is especially preferred because it also has an antibacterial effect. The heat exchanger may be of any of ordinary types. A preferred type is the one which is compact and permits flowing of water therethrough. Accordingly, a coil-like heat exchanger is preferred. The length of the heat exchanger differs depending upon the amount and temperature of the enriched air. In some cases, the length of the coil is desirably more than 1 meter.

The water-separating means serves to separate the water from the enriched air. The simplest means is to introduce water-containing enriched air from a side portion of a cylindrical tube, and separating the air upwardly and the moisture downwardly. To improve the separating efficiency, a packing such as a Raschig ring may be put into the cylindrical tube, and it is also possible to provide an obstacle such as a shelf therein. The water which gathers in the lower portion of the water separator is discharged out of it. The manner of discharging is not particularly restricted. For example, a receiver tray is provided to pool the water therein. Or the water is caused to be absorbed by a material capable of well absorbing water, such as a gauze, and then is evaporated. In the latter case, water can be evaporated efficiently by using the exhaust gas which has been used to cool the pump.

If required, the oxygen enricher may also include a column packed with activated carbon for example for removing noxious gases such as $NO_x$ and $SO_x$ and offensive odors from the enriched air, or a biofilter for removing bacteria from the enriched air. This is also effective for preventing bacterial contamination in the conduit portion for enriched air when the oxygen enricher is out of operation. The oxygen enricher may also include accessory parts such as alarms for detecting and warning an abnormal condition during the operation, timers, flow meters, manometers, etc.

The following Examples illustrate the present invention more specifically.

Example 1

(1) On both surfaces of an aluminum plate 41 having a size of 250 mm×500 mm×1 mm (thickness) were laminated a polypropylene net 46 (thickness 500 μm, mesh opening size 14 mesh) and a polyethylene terephthalate nonwoven fabric 47 (thickness 230 μm, basis weight 180 g/m²) having nearly the same size as the aluminum plate 41, in this order, to form a basic member.

Figure 1 of the accompanying drawings is a schematic perspective view illustrating the structure of this member.

A cut 42 having a width of 6 mm and a length of 40 mm was provided in one 250 mm-long side of the aluminum plate 41. To the cut 42 was fixed a drawing tube 44 for giving a gas drawing port 43 for drawing off a concentrated gas.

The drawing tube 44 was built by providing a cylindrical metallic tube having a thickness of 0.3 mm, an outside diameter of 3.3 mm and a length of 75 mm, and collapsing a 50 mm-long portion of the tube from one end thereof until that portion had a thickness of 1.2 mm (the collapsed portion had a width of 4.5 mm). The collapsed portion was inserted into the cut 42 of the aluminum plate 41 as shown in Figure 1, and an epoxy resin was filled in the space formed between the aluminum plate and the drawing tube to fix the drawing tube to the aluminum plate. At this time, the end 45 of the collapsed portion of the drawing tube 44 was positioned so that it formed a clearance of more than about 5 mm from the deepest part of the cut. By employing this construction, a gas concentrated by the solid membrane is collected by the drawing tube 44 from the end 45 through this clearance, and is drawn off from the drawing port 43.

The net 46, the nonwoven fabric 47 and a composite film 48 were laminated as shown in Figure 1 to both surfaces of the aluminum plate 41 having the drawing tube 44 fixed thereto. The aluminum plate, the net, the nonwoven fabric and solid membrane were fixed at their peripheral edge portion by an adhesive applied in a width of 15 mm so as to prevent air leakage from the peripheral edge.

The basic member for gas concentration showed a pressure drop of less than 80 Pa (0.6 mmHg) per cm.

The composite film used was composed of two very thin poly(4-methylpentene-1) membranes (total average thickness 0.15 μm; selectivity=3.8) supported on a porous polypropylene film (thickness 25 μm, maximum pore diameter 0.2 μm)

which was produced continuously by the process of EP—A—0031725. In lamination, the porous sheet side of the composite film was contacted with the nonwoven fabric.

(2) Fourteen members produced as in (1) above were aligned by using rubber spacers having a thickness of 3 mm and a width of 10 mm between the members at both edges of the longer sides so that the drawing ports 43 were positioned in the same direction. A separately built member consisting of an aluminum plate and laminated to one surface thereof, the aforesaid net, nonwoven fabric and solid membrane (i.e. the other side was an aluminum surface) was superimposed on each of the outermost members of the resulting array 51 (Fig. 2) of the 14 members so that the aluminum plate surface faced outwardly.

Drawing ports 43 from the individual members of the array 51 were connected to one assembling tube 52, and the entire structure was placed in a box 50.

Figure 2 of the accompanying drawings shows a schematic perspective view of the module of this invention in which the array 51 was placed in the box 50. In Figure 2, the reference numeral 52 represents the assembling tube connected to the first drawing tubes 44 of the individual members, and the reference numeral 53 represents a second common drawing port. The reference numeral 54 represents a common feed port for feeding a gas to be concentrated to the members, and 55, a third common drawing port for drawing the remaining gas formed as a result of concentration. The arrows show the flow of the gas.

A gas fed from the common feed port in the direction of arrow (a) passed through the individual members of the array 51, and was withdrawn as the remaining gas from the third common drawing port 55 in the direction of arrow (b). In other words, the fed gas was concentrated during passage through the members, and the concentrated gas was collected by the assembling tube 52 through the first drawing tubes 44, and drawn off from the second common drawing port 53.

Oxygen-enriched air was produced from the air using the module constructed as above. The second common drawing port 53 was connected to a vacuum pump (not shown), and while reducing the pressure, air was fed from the common feed opening port 54 at a rate of 0.3 m³/min. Oxygen-enriched air having an oxygen content of 41.7% by volume was obtained at a rate of 7 liters/min. from the vacuum pump.

Comparative Example 1

Members consisting of the aluminum plate, the polyethylene terephthalate nonwoven fabric and the composite film having an ultrathin membrane of poly(4-methylpentene-1) supported on the porous polypropylene membrane were produced in the same way as in Example 1 except that the polypropylene net was not used.

The members showed a pressure drop of 1.3 kPa (9.4 mmHg) per cm. A module was built in the same way as in Example 1 using these members.

Air was separated by using the module. When the module was operated while maintaining the pressure of the assembling tube 52 at 26.5 kPa (190 mmHg) ab., oxygen-enriched air having an oxygen content of 26.7% by volume was obtained at a rate of 2.9 liters/min.

Comparative Example 2

When in the module of Example 1, air was fed into the third common drawing port 55 at the same feed rate as in Example 1 and the remaining air was drawn off from the feed port 54, (i.e. the directions of arrows (a) and (b) were reversed), oxygen-enriched air having an oxygen content of 41.2% by volume was obtained at a rate of 7 liters/min. when the pressure in the assembling tube 52 was 21.3 kPa (160 mmHg).

When the amount of air fed was changed to 70 liters/min., oxygen-enriched air having an oxygen content of 40.9% by volume was obtained by the method of Example 1, and oxygen-enriched air having an oxygen content of 40.2% by volume was obtained by the method of the present Comparative Example. Furthermore, when the amount of air fed was further decreased to 35 liters/min. an oxygen content of 39.6% by volume was achieved by the method of Example 1, but an oxygen content of only 38.6% by volume was achieved by the method of this Comparative Example.

Example 2

An oxygen enricher was built by incorporating the module shown in Example 1 (see Figures 1 and 2).

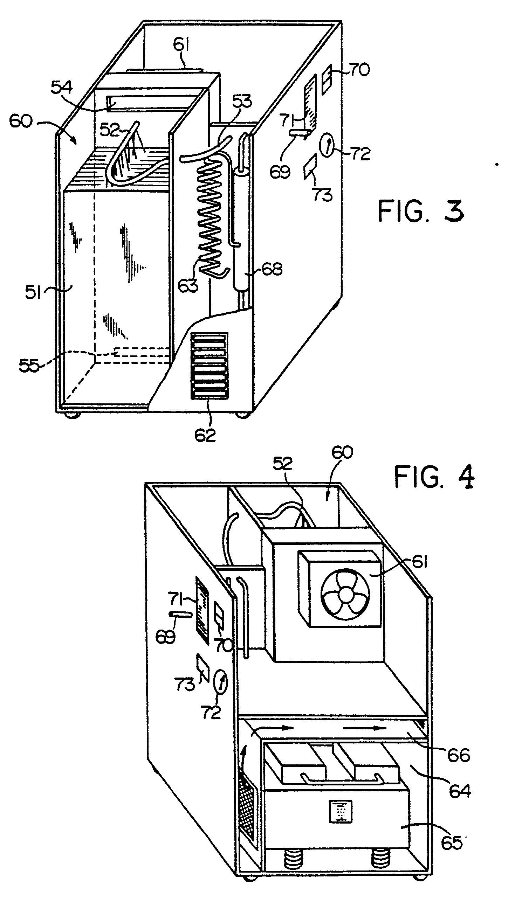

Figures 3 and 4 are schematic perspective views of the oxygen enricher of this invention. In these figures, the top and that side surface which appears in front on the sheet surface of these drawings are removed. Figure 4 shows the same oxygen enricher as in Figure 3 except that the rear side and the front side in Figure 3 are reversed.

In Figures 3 and 4, the reference numeral 51 represents an array of a plurality of laminated members including the solid membranes, and 52, an assembling tube connected to the oxygen-enriched air drawing ports of the individual members. The reference numeral 60 represents a module section having the array 51 therein with an air feed port 54 and a discharge port 55 for the remaining gas.

The atmospheric air taken into the oxygen enricher from the air take-in port 62 by the rotation of fan 61 rose in contact with a cooler 63 through which the oxygen-enriched air was passed, and went past the fan 61. Then, it was introduced into the module from air feed port 54 of the module 60 and passed through the array 51. Then, it left the module from the exhaust port 55 of the module (see Figure 3). Then, it entered a pump chamber 64 to cool a pump 65, and without heat exchange with oxygen-enriched air, was discharged out of the oxygen enricher via a discharge path. The discharge path 66 was independent so that it was kept from contact with electrical instruments (not shown Fig. 4).

On the other hand, by reducing the pressure of the inside of the individual members of the array 51 by a vacuum pump 65, oxygen-enriched air formed within the individual members was gathered by assembling tube 52, and *via* the vacuum pump 65, was cooled by flowing through cooling tube 63. Then, water was separated from the oxygen-enriched air by water separator 68, and as desired passed through an activated carbon layer or bacteria filter. Finally, the oxygen enriched air was taken out of the oxygen enricher from a drawing port 69.

The reference numerals 70, 71, 72 and 73 respectively represent a switch button for electric power, a flow meter, a pressure gauge and a timer.

The oxygen enricher had a width of 330 mm, a length of 380 mm, a height of 700 mm (the side having the air drawing port 69 was regarded as the front surface), and a weight of 40 kg. When this oxygen enricher was operated indoors at 15.0°C, oxygen-enriched air having an oxygen concentration of 41.7% was obtained at a rate of 7 liters/min. The temperature of oxygen-enriched air at an absolute pressure of 21.3 kPa (160 mmHg) was 15.4°C which was nearly the same as the temperature of the room. The noise during the operation was 43 horn at a place 1 meter away from the oxygen enricher.

Comparative Example 3

For comparison, an oxygen enricher was built as in Example 2 but using the module obtained in Comparative Example 1 which did not contain a polypropylene net. When this oxygen enricher was operated indoors at 15.0°C, oxygen enriched air having an oxygen concentration of 26.7% was obtained at a rate of 2.9 liters/min.

**Claims**

1. A module (50) comprising a plurality of members for obtaining a gas having a specified gas concentrated therein from a mixture of at least two gases, each of said members comprising (a) a support plate (41), (b) an intermediate element (46, 47) providing passage for gas when the support plate (41) is not net-like and (c) a composite film (48) comprised of a porous sheet-like material and one or a plurality of ultrathin solid membranes supported on the porous sheet-like material with a thickness of 5 to 500 nm (50 to 5000 Å), said ultrathin solid membranes being of an addition polymer derived from at least one monomer selected from ethylenically unsaturated hydrocarbon monomers and conjugated unsaturated hydrocarbon monomers, and said composite film (48) being laminated to one or both surfaces of the support plate (41) so that the porous sheet-like material of the composite film (48) faces the support plate (41); characterised in that

(1) each of said members is sealed gas-tight around the periphery except for a passage (44) to a first gas drawing port (43) for drawing off the gas having a specified gas concentrated therein, and the pressure drop in the passage (44) for the concentrated gas from each member is not more than 270 Pa (2 mmHg) per cm in a direction away from the member;

(2) the module (50) has a common feed port (54) for feeding the mixture of at least two gases to the solid membrane surface of each member, a second common drawing port (53) connected to the first gas drawing port (43) of each of said members, and a third common drawing port (55) for drawing off the remaining gases formed as a result of concentration by each of the members, and

(3) the passage (44) in each of the members to the first gas drawing port (43) is positioned closer to the common feed port (54) than to the third common drawing port (55).

2. A module according to claim 1 wherein the common feed port (54) and the third common drawing port (55) are present on the same side surface of the module or on different side surfaces not adjoining each other.

3. A module according to claim 1 or 2 which is a module for obtaining an oxygen-enriched gas from air.

4. An oxygen enricher for obtaining an oxygen-enriched gas from air comprising a module (60) including an array (51) of a plurality of members for obtaining the oxygen-enriched gas from the air, an air feed port (54) for feeding the air into the module (60), an air exhaust port (55) for drawing a gas of a reduced oxygen concentration from the module (60), a vacuum pump (65) for reducing the pressure on the oxygen-enriched gas in the members of the array (51) and withdrawing the oxygen-enriched gas therefrom through a tube (52), cooling and water removing means (63, 68) for lowering the temperature of the oxygen-enriched gas from the vacuum pump (65) and removing water therefrom, and a housing; characterised in that

(1) the module (60) is a module as claimed in any one of claims 1 to 3,

(2) a fan (61) is provided in front of the air feed port (54) of the module (60) and drawing therefrom gas having a reduced oxygen concentration,

(3) said vacuum pump (65) is adapted to be cooled by the gas having a reduced oxygen concentration which has left the array (51) and

(4) a passage (53) is provided through which the oxygen-enriched gas from vacuum pump (65) flows while it is cooled fully by the cooling and water-removing means (63, 68) cooled by the air taken into the oxygen enricher from the air feed port (54), and the cooled oxygen-enriched gas is then drawn out of the oxygen enricher without heat exchange with the gas having a reduced oxygen concentration which has cooled the vacuum pump (65).

5. An oxygen enricher according to claim 4 wherein the gas having a reduced oxygen concentration which has left the module (60) after cooling the vacuum pump (65) is discharged from the oxygen enricher through a winding path within the housing.

**Patentansprüche**

1. Modul (50) aus einer Anzahl von Bauteilen, um ein Gas mit bestimmter Gas-Konzentration aus einem Gemisch von zumindest zwei Gasen zu erhalten, wobei jedes Bauteil enthält:

a) eine Tragplatte (41),

b) eine Zwischenlage (46/47) für einen Gas-Durchgang, wenn die Trägerplatte (41) nicht netzartig ist, und

c) ein Verbundmaterial (48), enthaltend ein poröses Bahnmaterial und eine oder mehrere ultradünne Membran(en) auf dem porösen Bahnmaterial mit einer Dicke von 5 bis 500 nm (50 bis 5 000 A), wobei die ultradünnen Membranen aus einem Additionspolymeren bestehen, welches sich ableitet von zumindest einem Monomeren in Form von ethylenisch ungesättigten monomeren Kohlenwasserstoffen und konjugierten ungesättigten monomeren Kohlenwasserstoffen, und das Verbundmaterial (48) auf eine oder beide Fläche(n) der Trägerplatte (41) derart laminiert ist, daß das poröse Bahnmaterial des Verbundmaterials (48) der Trägerplatte (41) zugekehrt ist, dadurch gekennzeichnet, daß

1) jedes Bauteil über seinen Umfang gasdicht abgedichtet ist mit Ausnahme eines Durchgangs (44) zu einem ersten Gas-ablauf, um das Gas mit bestimmter Gas-Konzentration abzuleiten, und der Druckabfall in dem Durchgang (44) für das konzentrierte Gas von einem Bauteil nicht mehr als 270 Pa (2 mm Hg) je cm in Richtung weg von der Membran beträgt;

2) das Modul (50) einen geminsamen Einlauf (54) zur Zuführung des Gemischs von zumindest zwei Gasen zu der Membranfläche jedes Bauteil, einen zweiten gemeinsamen Ablauf, (53) in Verbindung mit dem ersten Gasablauf, (43) für jedes Bauteil und einen dritten gemeinsamen Ablauf, (55) zum Austrag der gebildeten restlichen Gase aufgrund der Konzentrierung durch jedes Bauteil aufweist und

3) der Durchgang (44) jedes Bauteils zu dem ersten Ablauf (43) näher an dem gemeinsamen Einlauf (54) angeordnet ist als zu dem dritten gemeinsamen Ablauf (55).

2. Modul nach Anspruch 1, wobei der gemeinsame Einlauf (54) und der dritte gemeinsame Ablauf (55) an der gleichen Seitenfläche des Moduls oder an unterschiedlichen Seitenflächen, die nicht einander zugekehrt sind, vorhanden sind.

3. Modul nach Anspruch 1 oder 2 zur Bildung eines sauerstoffangereicherten Gasstroms aus Luft.

4. Vorrichtung zur Bildung eines mit Sauerstoff angereicherten Gasstroms aus Luft aus einem Modul (60) mit einer Baugruppe (51) aus einer Anzahl von Bauteilen, um einen mit Sauerstoff angereicherten Gasstrom aus Luft zu erhalten, einem Lufteinlauf (54)˙ zur Zuführung von Luft in das Modul (60), einem Luftablauf (55) zum Austragen des Restgases mit verringerter Sauerstoff-

Konzentration aus dem Modul (60), einer Vakuumpumpe (65) zur Verringerung des Drucks auf das mit Sauerstoff angereicherte Gas in den Bauteilen der Baugruppe (51) und zum Austragen des mit Sauerstoff angereicherten Gases über ein Rohr (52), einer Kühlvorrichtung und Wasserableitung (63, 68) zur Herabsetzung der Temperatur des mit Sauerstoff angereicherten Gases aus der Vakuumpumpe (65) und Entfernung des Wassers daraus sowie einem Gehäuse, dadurch gekennzeichnet, daß

1) der Modul (60) ein solcher der Ansprüche 1 bis 3 ist,

2) ein Gebläse (61) vor dem Lufteinlauf (54) des Moduls (60) vorgesehen ist zum Abziehen von an Sauerstoff verarmtem Gas,

3) die Vakuumpumpe (65) mit an Sauerstoff verarmtem Gas aus der Baugruppe (51) gekühlt werden kann und

4) ein Durchgang (53) vorgesehen ist, durch welchen mit Sauerstoff angereichertes Gas von der Vakuumpumpe (65) nach Abkühlen und Entfernen des Wassers in (63 bzw. 68) mit Hilfe der über den Lufteinlauf (54) eingespeisten Luft und das gekühlte mit Sauerstoff angereicherte Gas aus der Vorrichtung abgeführt wird ohne Wärmeaustausch mit dem an Sauerstoff verarmten Gas, welches die Vakuumpumpe (65) gekühlt hat.

5. Vorrichtung nach Anspruch 4, worin das an Sauerstoff verarmte Gas nach Verlassen des Moduls (60) und Kühlen der Vakuumpumpe (65) aus der Vorrichtung ausgetragen wird über einen gewundenen Weg innerhalb des Gehäuses.

**Revendications**

1. Module (50) comprenant une pluralité d'éléments pour obtenir à partir d'un mélange d'au moins deux gaz, un gaz dans lequel est concentré un gaz spécifié, chacun desdits éléments comprenant (a) une plaque de support (41), (b) un élément intermédiaire (46, 47) assurant un passage pour le gaz lorsque la plaque de support (41) n'est pas semblable à un filet et (c) un film composite (48) constitué d'une matière poreuse analogue à une feuille et une ou plusieurs membranes pleines ultraminces supportées par la matière poreuse analogue à une feuille sur une épaisseur de 5 à 500 nm (50 à 5000 Å), lesdites membranes pleines ultraminces étant un polymère d'addition dérivé d'au moins un monomère choisi parmi les monomères hydrocarbures à insaturation éthylénique et les monomères hydrocarbures insaturés conjugués, et ledit film composite (48) étant accolé à une des surfaces ou aux deux surfaces de la plaque de support (41), de manière que la matière poreuse analogue à une feuille du film composite (48) se trouve en face de la plaque de support (41), caractérisé en ce que:

(1) chacun desdits éléments est fermé de façon étanche sur sa périphérie, sauf pour un passage (44) jusqu'à un premier orifice (43) de prélèvement de gaz pour prélever le gaz dans lequel est concentré un gaz spécifié, et la chute de pression dans le passage (44) pour le gaz concentré en provenance de chaque élément, n'est pas supérieur à 270 Pa (2 mmHg) par cm dans une direction d'éloignement par rapport à l'élément;

(2) le module (50) comporte un orifice commun (54) d'amenée pour amener le mélange d'au moins deux gaz jusqu'à la surface de la membrane pleine de chaque élément, un second orifice commun (53) de prélèvement raccordé au premier orifice (43) de prélèvement de gaz de chacun desdits éléments, et un troisième orifice commun (55) de prélèvement pour prélever les gaz restants formés par suite de la concentration par chacun des éléments, et

(3) le passage (44) dans chacun des éléments jusqu'au premier orifice (43) de prélèvement de gaz est placé plus près de l'orifice commun (54) d'amenée que du troisième orifice commun (55) de prélèvement.

2. Module selon la revendication 1, dans lequel l'orifice commun (54) d'amenée et le troisième orifice commun (55) de prélèvement, sont présents sur la même surface latérale du module ou sur des surfaces latérales différentes et ne sont pas contigus.

3. Module selon la revendication 1 ou 2, ce module étant un module pour obtenir à partir de l'air, un gaz enrichi en oxygène.

4. Enrichisseur d'oxygène pour obtenir à partir de l'air un gaz enrichi en oxygène, comprenant un module (60) dans lequel est inclus une rangée (51) d'une pluralité d'éléments permettant d'obtenir à partir de l'air le gaz enrichi en oxygène, un orifice (54) d'amenée d'air pour amener de l'air dans le module (60), un orifice (55) de sortie d'air pour prélever du module (60) un gaz ayant une concentration réduite en oxygène, une pompe (65) à vide pour réduire la pression sur le gaz enrichi en oxygène dans les éléments de la rangée (51) et pour en retirer le gaz enrichi en oxygène par l'intermédiaire d'un tube (52), un moyen de refroidissement et de déshydratation (63, 68) pour abaisser la température du gaz enrichi en oxygène en provenance de la pompe (65) à vide et pour en enlever l'eau, et une enveloppe, caractérisé en ce que :

(1) le module (60) est un module selon l'une quelconque des revendications 1 à 3,

(2) un ventilateur (61) est disposé en avant de l'orifice (54) d'amenée d'air du module (60) et prélève de ce module le gaz présentant une concentration réduite en oxygène,

(3) ladite pompe (65) à vide est conçue pour être refroidie par le gaz qui présente une concentration réduite en oxygène et qui a quitté la rangée (51), et

(4) un passage (53) est prévu à travers lequel le gaz enrichi en oxygène en provenance de la pompe (65) à vide s'écoule pendant qu'il est refroidi entièrement par le moyen de refroidissement et de déshydratation (63, 68) refroidi par l'air introduit dans l'enrichisseur d'oxygène depuis l'orifice (54) d'amenée d'air, et le gaz enrichi en oxygène et refroidi es ensuite prélevé de l'enrichisseur en oxygène sans échange de chaleur avec le gaz qui présente une concentration réduite en oxygène et qui a refroidi la pompe (65) à vide.

5. Enrichisseur d'oxygène selon la revendication 4, dans lequel le gaz qui présente une concentration réduite en oxygène et qui a quitté le module (60) après refroidissement de la pompe (65) à vide est déchargé de l'enrichisseur en oxygène à travers un circuit hélicoïdal à l'intérieur de l'enveloppe.

FIG. 1

FIG. 2

FIG. 3

FIG. 4